# FASCICULE DE BREVET EUROPEEN

(11) **EP 3 983 263 B1**
(45) Date de publication et mention de la délivrance du brevet: **23.10.2024**
(21) Numéro de dépôt: 20731090.5
(22) Date de dépôt: 10.06.2020
(51) Int. Cl.: B60N 2/879, B64D 11/00

(54) **SUPPORT POUR CONNECTER UN SIÈGE À UN RÉSEAU DE COMMUNICATION**
TRÄGER UM EINEN SITZ ZU EINEM KOMMUNIKATIONSNETZWERK ZU VERBINDEN
SUPPORT FOR CONNECTING A SEAT TO A COMMUNICATION NETWORK

(30) Priorité: 14.06.2019 FR 1906362
(43) Date de publication de la demande: 20.04.2022
(73) Titulaire: LATELEC, 31500 Toulouse (FR)
(72) Inventeur: PUERTOLAS, Bastien, 31280 AIGREFEUILLE (FR); PISANU, Jérémy, 31770 COLOMIERS (FR)
(74) Mandataire: Ipside
(86) Numéro de dépôt international: PCT/EP2020/066037
(87) Numéro de publication internationale: WO 2020/249592

(56) Documents cités:
- US-A1- 2005 132 407
- US-A1- 2014 226 983
- US-A1- 2016 176 357

## Description

### Domaine technique de l'invention

L'invention concerne un support pour équiper un siège, de manière réversible, d'un système de connectivité.

L'invention est notamment destinée à une application dans le domaine aéronautique, pour équiper un aéronef.

### Technique antérieure

Les cabines conventionnelles des aéronefs, notamment celles des avions long-courriers, sont équipées de systèmes de divertissement à bord (dit systèmes IFE), tels que des écrans, généralement placés au niveau des sièges passagers, pour offrir à chaque passager, un accès limité à des médias, tels que les films, proposés par la compagnie aérienne exploitant l'avion.

Les sièges d'avion équipés du système de divertissement à bord intègrent généralement un écran vidéo et une interface audio, et doivent par conséquent être connectés par du câblage à des unités centrales de traitement. De ce fait, ils sont plus lourds et plus complexes à réaliser que des sièges classiques, sans systèmes de divertissement à bord. De plus, le poids du câblage et de la connectique associée grève particulièrement le bilan de masse de l'avion. Enfin, la technologie évoluant vite, les écrans sont vite obsolètes.

Ces cabines sont parfois équipées d'un réseau de communication, type Wi-Fi (acronyme de Wireless Fidelity), pour offrir une connexion internet aux équipements électroniques portatifs (ordinateur, téléphone, tablette...) des passagers. Or le Wi-Fi présente de nombreux inconvénients, entre autres, l'utilisation du Wi-Fi peut causer des interférences avec d'autres appareils présents dans l'avion, ou encore peut soulever des questions de santé publique concernant les risques liés à une exposition prolongée à des rayonnements électromagnétiques.

Le document US 2014/0226983 divulgue un exemple d'aéronef dans lequel la cabine est équipée d'un réseau de communication de type Li-Fi, permettant d'offrir une connexion internet aux équipements électroniques portatifs des passagers. Certaines cabines d'avions, du type court-courrier, quant à elles, ne sont pas munies de tels systèmes de divertissement à bord et ne proposent pas nécessairement une connexion internet. Une des principales raisons réside dans l'impact sur le bilan de masse de l'avion. Une autre raison est que le vol est généralement trop court pour qu'un passager puisse par exemple regarder un film dans son intégralité.

Or les passagers sont munis de plus en plus avec des équipements électroniques. Il existe un besoin croissant exprimé par les passagers d'avoir la possibilité d'accéder au réseau de communication de l'avion et/ ou au système de divertissement à bord, même sur des vols court-courriers.

Le document US 2005/0132407 divulgue un exemple de support, destiné à être installé sur des sièges passagers, et permettant de se connecter à un réseau de communication. Le support comporte un connecteur pour la connexion d'un équipement électronique portatif du passager.

### Présentation de l'invention

La présente invention vise à remédier aux inconvénients précités.

Notamment, la présente invention a pour but de proposer aux passagers une connexion aux services de la compagnie et à internet sans recourir au Wifi et sans déployer l'installation d'un siège dédié.

A cet effet, il est proposé par la présente invention un support destiné à être installé, de manière réversible, au niveau d'une partie supérieure d'un dossier déhoussé d'un siège. Le support comporte :
- une plaque, destinée à venir en appui, en tout ou partie, contre une face arrière du dossier,
- trois mécanismes de serrage, chaque mécanisme de serrage comportant un organe d'appui et une vis de serrage destinés à coopérer avec la plaque pour pouvoir prendre en étau une armature structurale du dossier entre ledit organe d'appui et ladite plaque.
- un dispositif de communication de données selon la technologie Li-Fi relié à la plaque,
- un connecteur destiné à la connexion d'un équipement électronique, ledit connecteur étant relié au dispositif de communication par un câble.

La rotation des vis de serrage dans un sens ou dans l'autre permet de rapprocher ou d'écarter les organes de serrage associés de la plaque de manière à prendre en sandwich l'armature structurale du dossier, serrant ou desserrant ainsi le support de l'armature structurale du dossier.

Les mécanismes de serrage sont avantageusement agencés sur le support de sorte à éliminer tous les degrés de liberté entre le support et l'armature structurale. Les mécanismes de serrage permettent ainsi de garantir un maintien rigide du support sur le dossier, sans le dégrader.

Un tel support permet d'accessoiriser un siège, sans le modifier (pas de vissage, pas de collage sur le dossier lui-même). Le support peut ainsi être installé ou retiré du siège selon les besoins.

L'installation ou le retrait d'un tel support sur le siège peut être réalisé rapidement, sans requérir à des outils spécifiques. Un tournevis, par exemple, est suffisant.

Le support dispose d'un dispositif de communication de données configuré et orienté pour permettre une communication bidirectionnelle avec un dispositif de communication distant placé dans un environnement proche du siège équipé du support.

Le Li-Fi (acronyme anglais de Light Fidelity) est une technologie de communication sans fil basée sur l'utilisation de la lumière dans le domaine visible (longueur d'onde comprise entre 400nm et 780nm) ou le domaine infrarouge (longueur d'onde comprise entre 780nm et 2µm) comme vecteur d'informations.

Le principe du Li-Fi repose sur le codage et l'envoi de données via une modulation d'amplitude, de fréquence ou de phase d'une source lumineuse, selon un protocole standardisé.

La technologie Li-Fi permet de s'affranchir des problèmes de complexité d'installation et de poids de câblage, mais également des contraintes liées à la sécurité des données, la pollution électromagnétique rencontrée avec le Wi-Fi et ses problèmes en termes de santé.

De part ce dispositif de communication de données, le support propose un accès à un réseau de communication internet par la technologie Li-Fi.

Le support permet de connecter divers types équipements électroniques, tels que par exemple un écran, une tablette, un ordinateur portable. L'équipement électronique relié au support, et au dispositif de communication de données, via le connecteur.

Le support selon l'invention est avantageusement autonome. Aucun câblage n'est nécessaire. En effet, la batterie de l'équipement électronique peut alimenter elle-même le dispositif de communication de données.

Le support est préférentiellement destiné au domaine aéronautique, pour équiper un siège passager d'aéronef, mais peut également être destiné à tout autre domaine, tel que le domaine ferroviaire ou encore le domaine automobile, sans que cette liste soit exhaustive, pour équiper des sièges passagers.

Dans des modes particuliers de réalisation, l'invention répond en outre aux caractéristiques suivantes, mises en oeuvre séparément ou en chacune de leurs combinaisons techniquement opérantes.

Dans des modes particuliers de réalisation de l'invention, l'organe d'appui d'au moins un mécanisme de serrage se présente sous la forme d'une patte longitudinale présentant, à une extrémité libre, une forme de crochet.

De préférence, tous les organes d'appui se présentent sous la forme d'une patte longitudinale présentant, à une extrémité libre, une forme de crochet.

Une telle forme de crochet est avantageuse, lorsque l'armature structurale se présente sous la forme d'un cadre périphérique sous la forme d'un tube. Dans cette configuration, le crochet coopère avec le tube, en s'engageant autour dudit tube, améliorant le blocage du support sur le dossier.

Dans des modes particuliers de réalisation de l'invention, la plaque comporte une ouverture destinée à la réception de l'équipement électronique.

Dans des exemples de réalisation, la plaque comporte des éléments de maintien réversibles de l'équipement électronique dans l'ouverture de la plaque.

Dans des modes particuliers de réalisation de l'invention, le support comporte, dans une épaisseur de la plaque, une cheminée s'étendant de l'ouverture vers une périphérie de la plaque. Une telle cheminée permet avantageusement de garantir la circulation de l'air et une évacuation de l'air chaud hors de support, lorsqu'un équipement est placé dans l'ouverture de la plaque.

Dans des modes particuliers de réalisation de l'invention, le dispositif de communication comporte un émetteur et un récepteur disposés dans un boîtier de protection, le boîtier de protection comportant une portion vitrée en vis-à-vis de l'émetteur et du récepteur. Une telle portion vitrée n'entrave pas transmission/réception des signaux optiques en provenance du dispositif de communication de données ou du dispositif de communication distant.

Dans des exemples de réalisation, le boîtier de protection est solidaire de la plaque par une liaison rotule.

On entend par le terme « solidaire » lorsqu'il fait référence à des pièces les unes par rapport aux autres de manière classique en elle-même, que lesdites pièces sont mutuellement liées, un mouvement relatif entre elles pouvant toutefois être possible. Dans la présente description, par convention on désignera par « solidaire », des pièces étant liées l'une à l'autre par une liaison autorisant un mouvement relatif d'une pièce par rapport à l'autre. On désignera par « fixement solidaires » des pièces qui sont mutuellement liées de manière fixe, c'est-à-dire de sorte qu'un mouvement relatif entre elles est impossible.

La liaison rotule permet avantageusement d'orienter le boîtier de protection de sorte à aligner le dispositif de communication de données du support avec le dispositif de communication distant.

Dans des modes particuliers de réalisation de l'invention, le support comporte un carter pour recevoir le boîtier de protection, ledit carter étant fixement solidaire de la plaque. Un tel carter permet avantageusement de protéger le positionnement du boîtier de protection pour maintenir son orientation.

Dans des modes particuliers de réalisation de l'invention, le support comporte deux éléments de fixation réversibles, chaque élément de fixation reliant une partie inférieure de la plaque à l'extrémité libre d'une patte longitudinale.

L'invention est également relative à un siège comportant un dossier équipé d'un support tel que défini ci-dessus dans l'un de ses modes de réalisations. Le siège comporte en outre un bloc de rembourrage et d'une housse recouvrant le bloc de rembourrage et le support. La housse comporte une zone vitrée, préférentiellement agencée en vis-à-vis de la portion vitrée du boîtier de protection pour ne pas entraver la transmission/réception des signaux optiques en provenance du dispositif de communication de données ou du dispositif de communication distant.

### Brève description des figures

L'invention sera mieux comprise à la lecture de la description suivante, donnée à titre d'exemple nullement limitatif, et faite en se référant aux figures suivantes :
[Fig. 1] la figure 1 représente trois sièges disposés les uns derrière les autres, le siège le plus à droite comportant un exemple de support selon l'invention, le siège le plus à gauche est un siège standard avant installation d'un support selon l'invention, et le siège du milieu est un siège standard déhoussé avec sa structure mise à nue prêt à recevoir un support selon l'invention ;
[Fig. 2] la figure 2 représente une vue en éclaté des éléments constitutifs d'un exemple de support selon l'invention ;
[Fig. 3] la figure 3 représente, en perspective avant, une vue en éclaté d'une plaque et des mécanismes de serrage d'un exemple de support selon l'invention ;
[Fig. 4] la figure 4 représente une photographie de la plaque et des mécanismes de serrage du support de la figure 3 installé sur une partie supérieure d'un siège déhoussé ;
[Fig. 5] la figure 5 représente, en perspective arrière, une vue d'une plaque et des mécanismes de serrage d'un exemple de support selon l'invention ;
[Fig. 6] la figure 6 représente une photographie de la plaque et des mécanismes de serrage du support de la figure 5 installé sur une partie supérieure d'un siège déhoussé ;
[Fig. 7] la figure 7 représente, en perspective avant, une vue en éclatée (partielle) d'un exemple de support selon l'invention ;
[Fig. 8] la figure 8 représente une vue de face d'un exemple de support installé sur une partie supérieure d'un siège déhoussé ;
[Fig. 9] la figure 9 représente, en perspective arrière, une vue d'un exemple de support installé sur une partie supérieure d'un siège déhoussé, support équipé d'une tablette ;
[Fig. 10] la figure 10 représente une vue de détail, en perspective, d'un exemple de dispositif de communication placé dans un carter du support.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

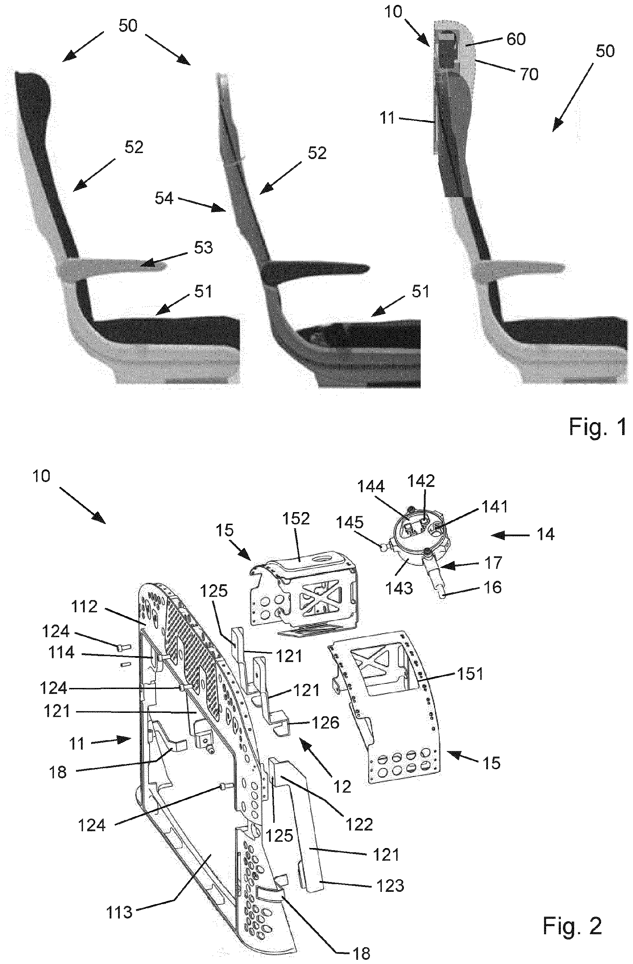

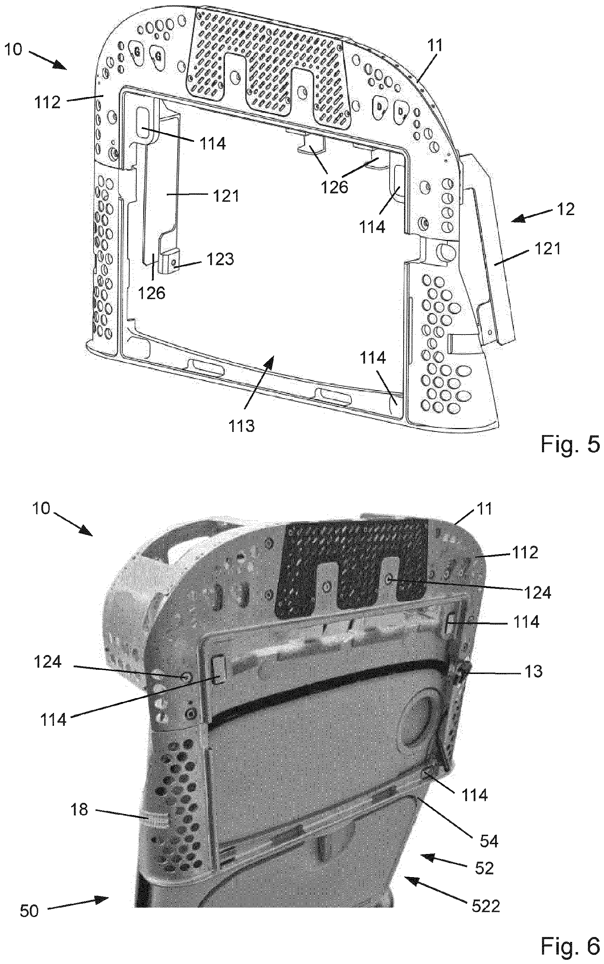

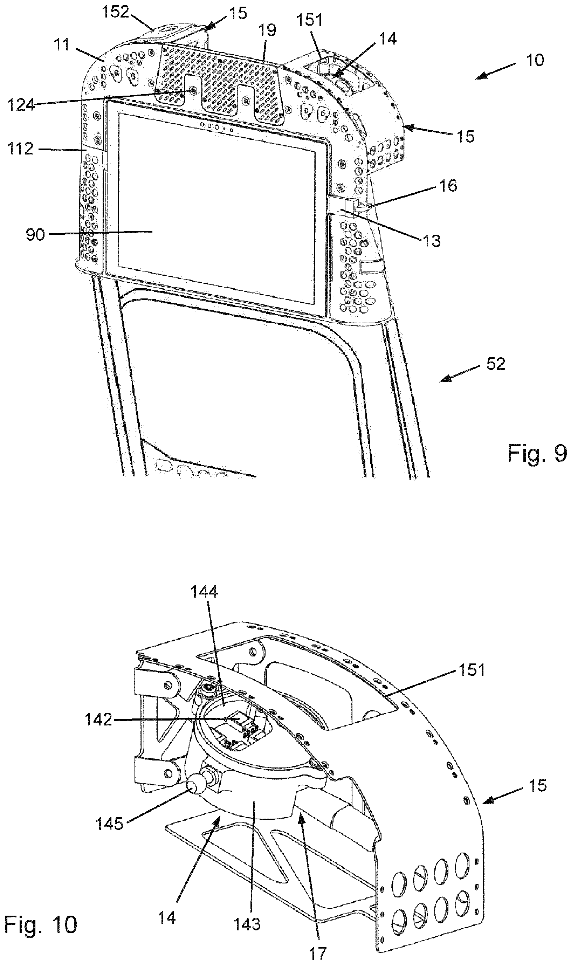

Un support 10, tel qu'illustré sur les figures 1 à 10, est destiné à être installé, de manière réversible, sur un siège 50. Un tel support 10 permet d'équiper un siège avec un système de connectivité permettant un accès à des données de divertissement et/ou des données internet.

Le support 10 peut, de manière générale, équiper des sièges de tout moyen de transport, notamment ceux des domaines aéronautique, ferroviaire et automobile, sans que cela soit restrictif de l'invention. Ainsi, il est également possible d'équiper du support, des sièges installés dans des lieux publics.

L'invention est décrite dans le contexte particulier d'un de ses domaines d'application préférés dans lequel le support est destiné à être installé sur un siège disposé dans une cabine passager d'un avion de ligne. Rien n'exclut cependant de disposer le support sur un siège passager dans tout autre type d'aéronef, qu'il soit civil ou militaire.

La figure 1 illustre trois sièges 50 passagers d'un avion, de type classe économique, disposés les uns derrière les autres.

De manière classique, un siège 50 comporte une assise 51 et un dossier 52. Le dossier 52 est relié préférentiellement à l'assise 51. Le dossier 52 comporte préférentiellement une armature structurale 55 qui est recouverte d'un bloc de rembourrage et d'une housse pour recevoir confortablement le dos du passager.

Le dossier 52 du siège situé le plus à gauche sur la figure 1 comporte le bloc de rembourrage et la housse. Le dossier 52 du siège situé au centre de la figure 1 est quant à lui déhoussé.

Dans la suite de la description, par dossier déhoussé, on entend un dossier auquel il a été retiré le bloc de rembourrage et la housse.

Le dossier 52 du siège 50 situé le plus à droite sur la figure 1 est équipé du support 10 amovible, et recouvert d'un bloc de rembourrage 60 et d'une housse 70 adaptées, comme il sera expliqué ultérieurement.

Le siège 50 peut comporter des accoudoirs 53, comme illustré de manière non limitative sur la figure 1.

Le dossier 52 du siège comporte une face avant 521 destinée à être du côté du passager assis sur le siège et une face arrière 522 destinée à être en vis du passager situé sur le siège arrière. Une coque de finition 54, généralement en plastique, du siège 50 est éventuellement disposée au niveau de la face arrière 522 du dossier 52, contre l'armature structurale 55. Une telle coque de finition 54 peut supporter un espace de rangement ou encore un porte-gobelet.

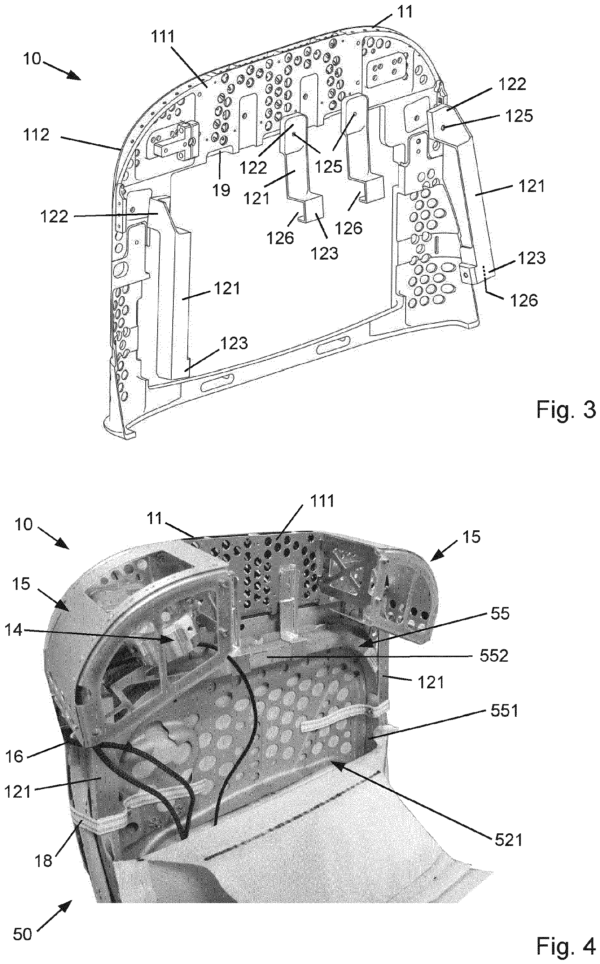

Dans l'exemple non limitatif de la figure 4, l'armature structurale 55 se présente sous la forme d'un cadre périphérique. Le cadre périphérique comporte deux portions latérales 551, définissant des bords latéraux du dossier 52 et une portion supérieure 552, définissant une partie supérieure 523 du dossier 52.

Le cadre périphérique est par exemple formé d'un tube cintré de section carrée. Le support 10 est destiné à être installé, de manière réversible, sur la partie supérieure 523 du dossier 52 préalablement déhoussé.

Le support 10 tel que décrit permet avantageusement d'équiper un siège 50 permettant au passager situé derrière ledit siège d'avoir un accès à des données de divertissement et/ou des données internet.

Ainsi, tel qu'illustré sur la figure 1, le support 10 placé sur le siège le plus à droite sur l'image permet un accès aux données de divertissement et/ou des données internet au passager assis sur le siège situé au centre de la figure.

Le support 10 est destiné et adapté à communiquer avec des équipements électroniques 90. Un équipement électronique 90 peut être par exemple un ordinateur portable, ou tout autre appareil électronique, tel qu'une tablette ou un téléphone portable. L'équipement électronique peut être un appareil proposé par la compagnie aérienne exploitant l'avion ou bien être un appareil propre au passager. Le support 10 comporte en premier lieu une plaque 11. Ladite plaque est destinée à venir en appui, en tout ou partie, contre la face arrière 522 du dossier 52 déhoussé. Ladite plaque vient en appui au moins au niveau de la partie supérieure 523 du dossier, comme illustré sur les figures 4, 6 à 8.

Dans l'exemple non limitatif de ces figures, ladite plaque s'étend au-delà de la partie supérieure 523 du dossier. La plaque 11 est dans le prolongement de la face arrière 522 du dossier 52.

Dans l'exemple non limitatif, la plaque 11 vient en appui contre la coque en plastique 54 du dossier 52. La coque en plastique est ainsi interposée entre la plaque 11 et l'armature structurale 55 du dossier.

La plaque 11 comporte une face avant 111 et une face arrière 112. La face avant 111 de la plaque 11 vient en appui contre la face arrière 522 du dossier 52.

La plaque 11 est conformée pour épouser la forme de la face arrière 522 du dossier 52, au niveau de sa partie supérieure 523. La plaque 11 est également conformée pour avoir une forme sensiblement équivalente à la forme de la partie supérieure 523 du dossier, pour maintenir, une fois le siège ré-houssé, une harmonie visuelle dans la cabine.

Le support 10 comporte, en outre, au moins trois mécanismes de serrage 12.

Chaque mécanisme de serrage 12 est avantageusement destiné à coopérer avec la plaque 11 pour venir prendre en étau l'armature structurale 55 du dossier 52 pour maintenir de manière fixe et rigide, mais non permanente, le support 10 sur le dossier 52.

Les mécanismes de serrage 12 sont préférentiellement agencés sur le support 10 de sorte que, lorsque ledit support est fixé à l'armature structurale 55 du dossier, tous les degrés de liberté (rotations, translations) entre le support 11 et l'armature structurale 55 sont supprimés. Ainsi, de tels mécanismes de serrage 12 permettent avantageusement de garantir un maintien serré du support 11 sur le dossier 52 du siège.

Dans l'exemple illustré sur les figures 2-5, 7 et 8, le support 10 comporte quatre mécanismes de serrage 12 :
- deux mécanismes de serrage 12 configurés de sorte à venir prendre appui contre la portion supérieure 552 du cadre périphérique faisant partie de l'armature structurale 55,
- deux mécanismes de serrage configurés de sorte à venir chacun prendre appui contre une portion latérale 551 du cadre périphérique faisant partie de l'armature structurale 55.

Bien que les mécanismes de serrage 12 sont illustrés sur les figures et décrits au nombre de quatre, le nombre de ces mécanismes de serrage n'est pas limité à celui décrit et illustré. Ainsi il est possible, sans se départir du cadre de l'invention, de réaliser un support avec trois, cinq mécanismes de serrage ou plus.

Ainsi, il est possible d'envisager que le support 10 ne comporte qu'un seul mécanisme de serrage 12, de dimension adaptée, disposé de sorte à venir prendre appui contre la portion supérieure 552 du cadre périphérique, au lieu des deux illustrés sur les figures.

Comme illustré sur les figures 2-5, 7 et 8, un mécanisme de serrage 12 comporte de préférence un organe d'appui 121 et une vis de serrage 124 destinés à coopérer avec la plaque 11 pour venir prendre en étau l'armature structurale 55 du dossier 52 entre ledit organe d'appui et ladite plaque.

La rotation de la vis de serrage 124 d'un mécanisme de serrage 12 dans un sens permet avantageusement de rapprocher l'organe d'appui 121 de la plaque 11. La rotation de la vis de serrage 124 dans l'autre sens permet d'éloigner l'organe d'appui 121 de la plaque 11.

Ainsi, lorsque le support 10 est disposé au niveau de la partie supérieure 523 du dossier 52, la rotation de la vis de serrage 124 d'un mécanisme de serrage 12 dans un sens permet de rapprocher l'organe d'appui 121 de la plaque 11 de manière à prendre en sandwich l'armature structurale 55 du dossier, serrant ainsi le support 10 à l'armature structurale. La rotation de la vis de serrage 12 dans l'autre sens permet d'écarter l'organe d'appui 121 de la plaque 11 de manière à desserrer ledit support de l'armature structurale 55 du dossier, pour le retirer.

Dans un autre mode de réalisation, lorsque le support 10 est disposé au niveau de la partie supérieure 523 du dossier 52, la vis de serrage 124 est vissée jusqu'à sa butée. Le maintien de la plaque 11 sur l'armature structurale 55 du dossier est assuré par l'élasticité de l'organe d'appui 121 du mécanisme de serrage 12, tout en évitant une erreur de serrage.

Dans un exemple de réalisation, illustré sur les figures 2 à 4, un organe d'appui 121 peut se présenter sous la forme d'une patte longitudinale. La patte longitudinale comporte une première extrémité 122 liée à la plaque 11. La première extrémité 122 comporte un trou taraudé 125. La plaque comporte préférentiellement un trou de passage de la vis, par exemple de type lamage, en vis-à-vis du trou taraudé de la patte longitudinale. La patte longitudinale est fixée à la plaque 11 par la mise en place de la vis de serrage 124 dans le trou de passage de la plaque 11 puis par vissage de la vis de serrage dans le trou taraudé de la patte longitudinale.

La patte longitudinale comporte une deuxième extrémité 123, dite extrémité libre, destinée à venir en contact avec l'armature structurale 55.

Dans un mode de réalisation de la patte longitudinale, lorsque l'armature structurale 55 se présente sous la forme d'un cadre périphérique tubulaire, l'extrémité libre 123 de la patte longitudinale a une forme en crochet 126 de forme complémentaire à la section du cadre périphérique tubulaire de telle sorte que, lorsque la rotation de la vis de serrage 124 rapproche la patte longitudinale de la plaque 11, le crochet 126 coopère avec ledit cadre périphérique tubulaire, en s'engageant autour dudit cadre périphérique, améliorant ainsi le blocage en rotation et en translation du support 10 sur l'armature structurale 55.

Un support 10 avec de tels mécanismes de serrage 12 permet avantageusement une installation dudit support sur le dossier 52 sans le détériorer. Aucune fixation par vissage ni collage sur le dossier lui-même n'est nécessaire. Le support 10 peut être retiré aisément également sans dégradation, par simple desserrage des vis de serrage 124 des mécanismes de serrage 12. La structure du siège 50 est ainsi préservée. Aucune modification du siège n'est nécessaire. En conséquence, il n'y a ainsi pas de besoin de certifier un nouveau siège.

Le support 10 comporte en outre un connecteur 13 pour y raccorder un équipement électronique 90.

Le connecteur 13 peut être par exemple, et de manière non limitative, un connecteur USB (acronyme anglais pour Universal Serial Bus). Il est évident que tout autre type de connecteur peut être utilisé, par exemple un connecteur USB type C, un connecteur RJ 45.

De préférence, le connecteur 13 est accessible depuis la face arrière 112 de la plaque 11.

Le support 10 comporte en outre un dispositif de communication de données selon la technologie Li-Fi, dit dispositif de communication 14, comme illustré sur les figures 2, 7 et 10.

Le dispositif de communication 14 du support est configuré pour être relié à un équipement électronique 90, comme il sera expliqué par la suite.

Le dispositif de communication 14 du support est destiné à être associé à un dispositif de communication idoine disposé dans l'avion, dit dispositif de communication distant (non représenté sur les figures). Le dispositif de communication distant est relié notamment avec des unités centrales de traitement des système multimédias de bord (IFE). Le dispositif de communication distant est préférentiellement disposé dans un plafond de l'avion.

Le dispositif de communication 14 du support et le dispositif de communication distant permettent avantageusement l'établissement d'une communication bidirectionnelle de données, c'est-à-dire :
- dans le sens de communication dite descendante, une transmission des données de divertissement et/ou des données internet vers l'équipement,
- dans le sens de communication dite ascendante, une transmission des données de divertissement et/ou des données internet depuis l'équipement.

De façon connue en soi, le dispositif de communication 14 du support comporte un émetteur 141 et un récepteur 142. Ledit émetteur est configuré pour émettre un signal spécifique en direction d'un récepteur disposé dans le dispositif de communication distant. Le récepteur 142 dudit dispositif de communication 14 du support est configuré pour recevoir un signal spécifique en provenance d'un émetteur disposé dans le dispositif de communication distant.

Plus précisément, le dispositif de communication comporte, comme émetteur 14, une source lumineuse adaptée à émettre, préférentiellement dans le domaine infrarouge, un signal optique modulé de type Li-Fi, dit premier signal.

Dans un exemple non limitatif de réalisation, cette modulation du signal optique est obtenue en commandant l'intensité de la source lumineuse de façon variable à très haute fréquence.

La source lumineuse est par exemple une diode électroluminescente (DEL) ou un laser.

Le dispositif de communication comporte, comme récepteur 142, un module d'acquisition d'un signal optique modulé de type Li-Fi, dit deuxième signal, provenant de l'émetteur du dispositif de communication distant.

Ledit module d'acquisition du dispositif de communication 14 du support est adapté à détecter les variations d'intensité du deuxième signal. Le module d'acquisition convertit les données de variations d'intensité du signal optique en un signal numérique à destination de l'équipement.

Dans un exemple de réalisation, le module d'acquisition est une photodiode. L'émetteur 141 et le récepteur 142 du dispositif de communication 14 du support sont préférentiellement disposés dans un boîtier de protection 143. Ledit boîtier de protection comporte préférentiellement une portion vitrée 144 transparente, en vis à en vis de l'émetteur 141 et du récepteur 142, pour ne pas gêner la transmission/réception des premier et deuxième signaux.

Le boîtier de protection 143 est préférentiellement solidaire de la face avant 111 de la plaque 11.

Dans un exemple préféré de réalisation, le boîtier de protection 143 est solidaire de la face avant 111 de la plaque 11 par une liaison rotule 145. Pour rappel, une liaison rotule lie la plaque 11 et le boîtier de protection 143 en translation mais les laisse libres en rotation. Une telle liaison rotule permet de régler l'orientation du boîtier de protection 143, donc du dispositif de communication 14 du support, par rapport au dispositif de communication distant selon son emplacement. Le boîtier de protection 143 est orienté de sorte que la transmission/réception des premier et deuxième signaux entre les deux dispositifs de communication puisse être réalisée.

Dans un mode de réalisation, pour s'adapter au flux lumineux du dispositif de communication distant, le dispositif de communication peut comporter au moins une lentille agencée sur un axe optique de son émetteur 141, et au moins une lentille agencée sur un axe optique de son récepteur 142. Ces lentilles sont par exemple installées à la place de la portion vitrée 144 du dispositif de communication 14. Ces lentilles peuvent également être installées, dans le dispositif de communication, entre l'émetteur et/ou le récepteur et la portion vitrée, et en coopération avec ladite portion vitrée 144.

Le boîtier de protection 143 est préférentiellement disposé dans un carter 15 fixement solidaire de la face avant 111 de la plaque 11.

Le carter 15 définit préférentiellement un volume creux configuré pour recevoir le boîtier du dispositif de communication.

Un tel carter 15 permet avantageusement de protéger le boîtier de protection 143 et donc de maintenir le positionnement donné au boîtier de protection. Il permet d'éviter un dérèglement de l'orientation du boîtier de protection.

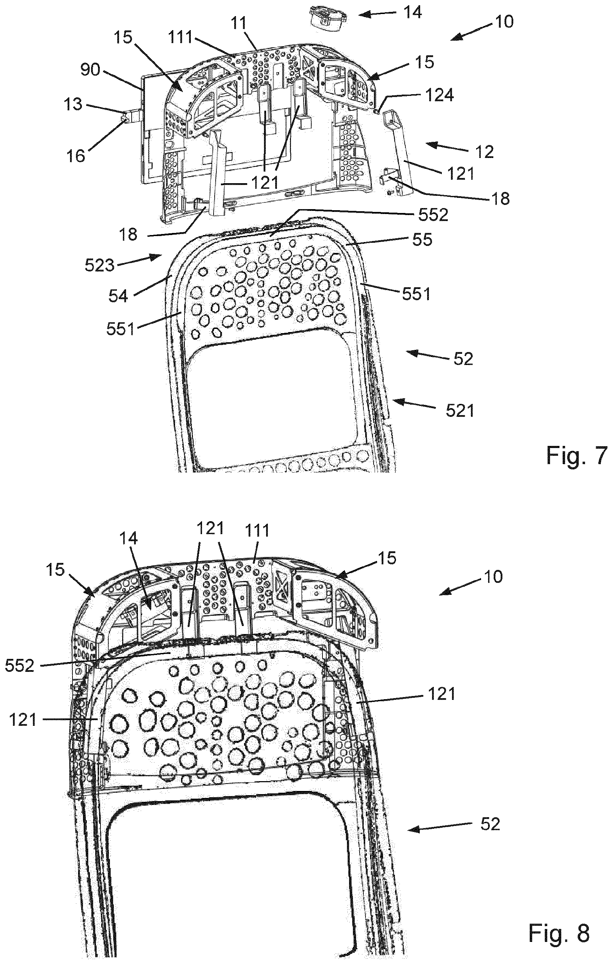

Dans un exemple préféré, illustré sur les figures 7 à 9, afin de limiter l'encombrement en épaisseur du support 10, le carter 15 est disposé au-dessus de la partie supérieure 523 du dossier 52 du siège.

Le carter 15 comporte préférentiellement au moins une ouverture 151, vitrée ou non, en vis à en vis de la portion vitrée 144 transparente du boîtier de protection 143, pour ne pas entraver la transmission/réception des premier et deuxième signaux entre les deux dispositifs de communication.

Ladite ouverture du carter 15 est disposée en vis-à-vis du dispositif de communication distant. Dans l'exemple où le dispositif de communication distant est agencé dans le plafond de l'avion, ladite ouverture est en vis-à-vis du plafond, sur une partie supérieure du carter, comme illustré sur les figures 7 à 10.

Le carter 15 peut être réalisé de façon monobloc avec la plaque 11 ou être une pièce rapportée et fixée solidairement sur la plaque 11, par exemple au moyen de vis.

Dans un exemple préféré de réalisation, et tel qu'illustré sur les figures 7 à 9, le support 10 comporte deux carters 15, disposés symétriquement sur la plaque 11, disposés au-dessus de la partie supérieure 523 du dossier 52 du siège. Les deux carters 15 présentent une forme extérieure avec une courbure sensiblement similaire à la courbure d'une portion d'une partie supérieure de la plaque.

Dans une telle configuration, le support 10 comporte un seul dispositif de communication 14, qui sera disposé dans un des deux carters. Dans cette configuration, pour le carter qui ne reçoit pas de dispositif de communication 14, une plaque de fermeture 152 est disposée de sorte à recouvrir l'ouverture 151 dudit carter, comme illustrée sur la figure 2.

Le choix du positionnement du dispositif de communication 14 du support dans l'un ou l'autre des carters 15 est lié au positionnement du dispositif de communication distant. Ainsi, à titre illustratif, lorsque le dispositif de communication distant est disposé dans le plafond de l'avion, au niveau du couloir, les sièges disposés côté aile gauche de l'avion comportent un support 10 avec un dispositif de communication 14 préférentiellement disposé dans le carter 15 droit du support (i.e. le carter situé coté couloir). Les sièges disposés côté aile droite de l'avion comportent un support 10 avec un dispositif de communication 14 préférentiellement disposé dans le carter gauche dudit support (i.e. le carter situé coté couloir).

Il est également envisageable d'équiper le support 10 avec un dispositif de communication 14 dans chaque carter 15. Dans ce cas, seul un dispositif de communication 14 sera relié au connecteur 13.

Dans un autre exemple de réalisation, le support 10 peut comporter un unique carter 15, disposé au-dessus de la partie supérieure 523 du dossier 52 et qui présente une forme extérieure avec une courbure sensiblement similaire à la courbure d'une partie supérieure de la plaque 11.

Le dispositif de communication 14 est avantageusement relié au connecteur 13 par un câble 16. Dans l'exemple illustré, le câble 16 circule le long de l'armature structurale 55 du dossier. Lorsque le dossier sera ré-houssé, le câble sera invisible. Dans une autre forme de réalisation, le câble 16 peut présenter une portion visible dépassant hors de la face arrière 112 de la plaque 11 et du support 10, et se terminant, à une extrémité, dite première extrémité, par le connecteur 13.

Le câble 13 est préférentiellement raccordé au boîtier de protection 143 par des moyens de connexion complémentaires 17, tels que par exemple un port USB sur le boitier de protection 14 et un connecteur USB à une seconde extrémité du câble 16, ou réciproquement. Bien entendu, l'invention n'est pas limitée à des moyens de connexion USB mais peut comprendre d'autres moyens de connexion complémentaires sans que cela ne sorte du cadre de l'invention.

Dans une version de réalisation, la plaque 11 du support 10 comporte, au niveau de sa face arrière 112, une ouverture 113 configurée pour recevoir une tablette 90, ou un écran, distribuée par la compagnie aérienne. Ladite ouverture présente une dimension adaptée à ladite tablette.

Dans l'exemple de réalisation décrit sur les figures 2, 3, 5 à 7 et 9, ladite ouverture de réception de la tablette est traversante, i.e. que l'ouverture est réalisée dans toute l'épaisseur de la plaque 11. Une telle configuration d'ouverture traversante présente l'avantage de réduire le poids du support.

La plaque 11 du support 10 peut comporter des éléments de maintien 114 réversibles de la tablette dans l'ouverture 113 de la plaque 11. La tablette peut comporter des éléments de maintien complémentaires aux éléments de maintien 114 de la plaque.

Dans un exemple non limitatif de l'invention, les éléments de maintien 114 sont des aimants.

La tablette 90 comporte avantageusement des moyens de connexion complémentaires au connecteur 13 du support 10.

Dans un mode de réalisation, pour apporter un maintien du support 10 sur le dossier 52, complémentaire aux mécanismes de serrage 12, le support 10 comporte deux éléments de fixation réversibles 18, chaque élément de fixation reliant une partie inférieure de la plaque 11 à l'extrémité libre 123 d'une patte venant prendre appui sur une portion latérale 551 du cadre périphérique. De tels éléments de fixation permettent de garantir que la partie inférieure de la plaque 11 reste bien plaquée contre le dossier 52, et ne s'écarte pas, notamment dues aux vibrations dans l'avion. Dans un exemple de réalisation, les éléments de fixation sont des éléments de fixation souple tels que des bandes textiles à boucles et crochets (du type bandes Velcro^{®}), qui s'adaptent à la géométrie complexe et aux variations d'épaisseur du dossier déhoussé.

Dans un mode de réalisation, lorsque la plaque 11 du support 10 comporte une ouverture 113 pour une tablette 90, le support 10 comporte, dans l'épaisseur de la plaque 11, au moins une cheminée 19 s'étendant depuis ladite ouverture vers une périphérie de la plaque, de préférence vers la partie supérieure de la plaque 11, comme illustré sur les figures 3 et 4. La au moins une cheminée 19 permet de garantir la circulation de l'air et une évacuation de l'air chaud hors du support 10. Pour réduire avantageusement le poids du support 10, la plaque et les carters sont par exemple perforés, comme illustré sur les figures 2 à 10.

La plaque 11, les carters 15 et les mécanismes de serrage 12 du support 10 sont préférentiellement réalisés dans un matériau en aluminium. Bien entendu, l'invention n'est pas limitée au matériau en aluminium mais peut également être réalisée dans d'autres matériaux, tels qu'un matériau composite.

Une fois le support 10 mis en place sur le dossier 52, le dossier est ré-houssé.

Un bloc de rembourrage 60 à base de mousse, par exemple en polyuréthane, élastiquement compressible est placé au niveau de la face avant 521 du dossier 52, ledit bloc de rembourrage surmoulant l'armature structurale 55 et le support 10 au niveau de sa face avant.

Une housse 70, de dimension adaptée, recouvre ensuite avantageusement le bloc de rembourrage 60 et le support 10 et se fixe de manière classique sur le dossier 52, comme les housses existantes, via par exemple des bandes textiles à boucles et crochets (telle que des bandes Velcro^{®}).

La housse 70 recouvre avantageusement entièrement le support 10, devenant invisible pour les passagers.

Dans l'exemple de réalisation où la plaque 11 du support 10 comporte une ouverture 151 de réception de la tablette 90, la housse 70 recouvre en partie le support 10, ne laissant apparaitre que ladite ouverture.

La housse 70 est préférentiellement réalisée dans un tissu maillé, notamment pour permettre l'évacuation de l'air chaud provenant de la tablette 90, lorsqu'elle est installée dans l'ouverture 113 de la plaque 11 du support 10, et circulant dans au moins une cheminée 19.

La housse 70 comporte de préférence une zone vitrée (non représentée sur les figures), en vis à en vis de la portion vitrée 144 transparente du boîtier de protection 14 et de l'ouverture 151, vitrée ou non, du carter 15, pour ne pas entraver la transmission/réception des premier et deuxième signaux entre les deux dispositifs de communication.

L'installation de la housse du siège assure une utilisation pérenne du support. Elle diminue le risque de détérioration, vandalisme, vol, et assure une harmonie visuelle conforme aux sièges actuels non équipés d'écran ou aux sièges nativement équipés d'écran.

Le siège situé à droite sur la figure 1 comporte le support 10 installé sur la partie supérieure du dossier. Il y est en outre représenté le bloc de rembourrage 60 et la housse 70 (visible en pointillé) adaptés. Il y est également représenté, à titre de comparaison, le bloc de remplissage et la housse du dossier, lorsque le support n'est pas installé.

Il est clairement visible sur cette figure que le support 10 forme un prolongement de la partie supérieure 523 du dossier 52 du siège.

Le support présente de nombreux avantages, décrit ci-après de manière non exhaustive.

Le support, lorsqu'il est installé sur le siège, présente un encombrement restreint, tant en termes de hauteur (pour ne pas masquer les consignes), en largeur (sensiblement de même largeur que la largeur du siège) et en profondeur (pour ne pas entraver le passage, notamment pour des questions de sécurité en cas d'évacuation).

Le support, lorsqu'il est installé sur le siège, en plus d'offrir un accès à des données de divertissement et/ou des données internet au passager situé derrière le siège, crée un appui-tête pour la personne assise sur le siège.

Le support permet avantageusement aux passagers d'avoir un accès à des données de divertissement et/ou des données internet, avec leur équipement électronique personnel, dans un espace privilégié déterminé, autour de son siège, via la technologie Li-Fi. Par espace privilégié, on entend un espace de connexion unique et personnel permettant à un passager de recevoir et/ou d'envoyer des données internes et/ou externe à l'avion de façon sécurisée et personnalisée dans un emplacement physique prédéterminé, en l'occurrence son siège. Le passager bénéficie d'un espace de connexion unique et personnel pour recevoir et transmettre des données de manière confidentielle.

Le support permet d'équiper un siège classique non muni de système de divertissement à bord IFE, ou d'équiper un siège muni d'un système de divertissement à bord avec un écran obsolète, et permet aussi de connecter les équipements personnels des passagers.

Equiper un siège d'un tel support peut présenter un intérêt économique pour la compagnie exploitante de l'avion plutôt que de remplacer tous les sièges équipés d'écran obsolète par de nouveaux sièges équipés d'écran dernière génération.

Le montage du support sur le siège au moyen d'un simple serrage ne détériore pas le siège. Ainsi, le support peut être enlevé selon les besoins d'exploitation de l'avion pour revenir à la configuration d'origine, ou de futures évolutions.

L'installation du support au moyens des mécanismes de réglage est rapide et peut s'adapter à différents types et tailles de sièges.

## Revendications

1. Support (10) destiné à être installé, de manière réversible, au niveau d'une partie supérieure (523) d'un dossier (52) déhoussé d'un siège (50), ledit support comportant un connecteur (13) destiné à la connexion d'un équipement électronique (90),
**caractérisé en ce que** le support comporte :
- une plaque (11), destinée à venir en appui, en tout ou partie, contre une face arrière (522) du dossier (52),
- trois mécanismes de serrage (12), chaque mécanisme de serrage (12) comportant un organe d'appui (121) et une vis de serrage (124) destinés à coopérer avec la plaque (11) pour pouvoir prendre en étau une armature structurale (55) du dossier (52) entre ledit organe d'appui et ladite plaque,
- un dispositif de communication de données (14) selon la technologie Li-Fi relié à la plaque (11),
et **en ce que** le connecteur (13) est relié au dispositif de communication de données (14) selon la technologie Li-Fi par un câble (16).

2. Support (10) selon la revendication 1 dans lequel l'organe d'appui (121) d'au moins un mécanisme de serrage (12) se présente sous la forme d'une patte longitudinale présentant, à une extrémité dite libre (123), une forme de crochet (126).

3. Support (10) selon l'une des revendications précédentes dans lequel la plaque (11) comporte une ouverture (113) destinée à la réception d'un équipement électronique (90).

4. Support (10) selon la revendication 3 dans lequel la plaque (11) comporte des éléments de maintien (114) réversibles de l'équipement électronique (90) dans l'ouverture (113) de la plaque (11).

5. Support (10) selon l'une des revendications 3 ou 4 comportant, dans une épaisseur de la plaque (11), au moins une cheminée (19) s'étendant depuis l'ouverture (113) vers une périphérie de ladite plaque.

6. Support (10) selon l'une des revendications précédentes dans lequel le dispositif de communication de données (14) comporte un émetteur (141) et un récepteur (142) disposés dans un boîtier de protection (143), le boîtier de protection comportant une portion vitrée (144) en vis-à-vis de l'émetteur et du récepteur.

7. Support (10) selon la revendication précédente dans lequel le boîtier de protection (143) est solidaire de la plaque (11) par une liaison rotule (145).

8. Support (10) selon l'une des revendications 6 à 7 comportant un carter (15) pour recevoir le dispositif de communication de données (14), ledit carter étant fixement solidaire de la plaque (11).

9. Support (10) selon l'une des revendications 2 à 8 comportant deux éléments de fixation réversibles (18), chaque élément de fixation reliant une partie inférieure de la plaque (11) à l'extrémité libre (123) d'une patte longitudinale.

10. Siège (50) comportant un dossier (52) équipé d'un support (10) selon l'une des revendications 1 à 9, d'un bloc de rembourrage (60) et d'une housse (70) recouvrant ledit bloc de rembourrage et ledit support, ladite housse comportant une zone vitrée.

## Patentansprüche

1. Träger (10), der dazu bestimmt ist, reversibel an einem oberen Teil (523) einer Rückenlehne (52) ohne Bezug eines Sitzes (50) installiert zu werden, wobei der Träger ein Verbindungsstück (13) umfasst, das für die Verbindung mit einem elektronischen Gerät (90) bestimmt ist,
**dadurch gekennzeichnet, dass** der Träger Folgendes umfasst:
- eine Platte (11), die dazu bestimmt ist, ganz oder teilweise an einer hinteren Fläche (522) der Rückenlehne (52) anzuliegen,
- drei Klemmmechanismen (12), wobei jeder Klemmmechanismus (12) ein Stützelement (121) und eine Klemmschraube (124) umfasst, die dazu bestimmt sind, mit der Platte (11) zusammenzuwirken, um einen Strukturrahmen (55) der Rückenlehne (52) zwischen dem Stützelement und der Platte festklemmen zu können,
- eine Li-Fi-Technologie-Datenkommunikationsvorrichtung (14), die mit der Platte (11) verbunden ist,
und dadurch, dass das Verbindungsstück (13) mit der Li-Fi-Technologie-Datenkommunikationsvorrichtung (14) über ein Kabel (16) verbunden ist.

2. Träger (10) nach Anspruch 1, wobei das Stützelement (121) mindestens eines Klemmmechanismus (12) die Form einer länglichen Nase aufweist, die an einem freien Ende (123) eine Hakenform (126) aufweist.

3. Träger (10) nach einem der vorhergehenden Ansprüche, wobei die Platte (11) eine Öffnung (113) umfasst, die für die Aufnahme eines elektronischen Geräts (90) bestimmt ist.

4. Träger (10) nach Anspruch 3, wobei die Platte (11) reversible Halteelemente (114) für das elektronische Gerät (90) in der Öffnung (113) der Platte (11) umfasst.

5. Träger (10) nach einem der Ansprüche 3 oder 4, der in einer Dicke der Platte (11) mindestens einen Schacht (19) umfasst, der sich von der Öffnung (113) in Richtung einer Peripherie der Platte erstreckt.

6. Träger (10) nach einem der vorhergehenden Ansprüche, wobei die Datenkommunikationsvorrichtung (14) einen Sender (141) und einen Empfänger (142) umfasst, die in einem Schutzkasten (143) angeordnet sind, wobei der Schutzkasten einen verglasten Abschnitt (144) gegenüber dem Sender und dem Empfänger umfasst.

7. Träger (10) nach dem vorhergehenden Anspruch, wobei der Schutzkasten (143) durch eine Gelenkverbindung (145) an der Platte (11) befestigt ist.

8. Träger (10) nach einem der Ansprüche 6 bis 7, der ein Gehäuse (15) zum Aufnehmen der Datenkommunikationsvorrichtung (14) umfasst, wobei das Gehäuse fest an der Platte (11) befestigt ist.

9. Träger (10) nach einem der Ansprüche 2 bis 8, der zwei reversible Befestigungselemente (18) umfasst, wobei jedes Befestigungselement einen unteren Teil der Platte (11) mit dem freien Ende (123) einer länglichen Nase verbindet.

10. Sitz (50), der eine Rückenlehne (52) umfasst, die mit einem Träger (10) nach einem der Ansprüche 1 bis 9, mit einem Polsterblock (60) und mit einem Bezug (70), der den Polsterblock und den Träger bedeckt, ausgestattet ist, wobei der Bezug einen verglasten Bereich umfasst.

## Claims

1. Support (10) intended to be installed, reversibly, at a top part (523) of an uncovered backrest (52) of a seat (50), said support comprising a connector (13) intended for connecting electronic equipment (90),
**characterised in that** the support comprises:
- a plate (11) intended to bear, totally or partially, against a rear face (522) of the backrest (52),
- three clamping mechanisms (12), each clamping mechanism (12) comprising an bearing member (121) and a clamping screw (124) both intended to cooperate with the plate (11) so as to be able to clamp a structural frame (55) of the backrest (52) between said bearing member and said plate,
- a data communication device (14) in accordance with Li-Fi technology connected to the plate (11),
and **in that** the connector (13) is connected to the data communication device (14) in accordance with Li-Fi technology by a cable (16).

2. Support (10) according to claim 1, wherein the bearing member (121) of at least one clamping mechanism (12) is in the form of a longitudinal lug having, at a so-called free end (123), a hook-like shape (126).

3. Support (10) according to one of the preceding claims, wherein the plate (11) comprises an opening (113) intended for receiving an electronic equipment (90).

4. Support (10) according to claim 3, wherein the plate (11) comprises elements (114) for reversible holding the electronic equipment (90) in the opening (113) of the plate (11) .

5. Support (10) according to one of claims 3 or 4 comprising, in a thickness of the plate (11), at least one chimney (19) extending from the opening (113) towards a periphery of said plate.

6. Support (10) according to one of the preceding claims, wherein the data communication device (14) comprises a emitter (141) and a receiver (142) both disposed in a protective casing (143), the protective casing comprising a glazed portion (144) facing the emitter and receiver.

7. Support (10) according to the preceding claim, wherein the protective casing (143) is secured to the plate (11) by a ball-joint connection (145).

8. Support (10) according to one of claims 6 to 7, comprising a housing (15) for receiving the data communication device (14), said housing being fixedly secured to the plate (11).

9. Support (10) according to one of claims 2 to 8, comprising two reversible fastening elements (18), each fastening element connecting a bottom part of the plate (11) to the free end (123) of a longitudinal lug.

10. Seat (50) comprising a backrest (52) equipped with a support (10) according to one of claims 1 to 9, with a padding block (60) and a cover (70) covering said padding block and said support, said cover comprising a glazed zone.
